# EUROPÄISCHE PATENTSCHRIFT

(11) **EP 0 735 012 B1**
(45) Veröffentlichungstag und Bekanntmachung des Hinweises auf die Patenterteilung: **01.07.1998**
(21) Anmeldenummer: 96104201.7
(22) Anmeldetag: 16.03.1996
(51) Int. Cl.: C04B 41/50, C04B 41/65, C04B 41/67, F16L 55/162, F16L 58/06

(54) **Verfahren zum Behandeln der Zementmörtel-Auskleidung eines insbesondere Trinkwasser führenden Rohres**
Process for treating cement mortar linings for pipes, especially pipes carrying drinking water
Procédé de traitement d'un revêtement en mortier de ciment dans un tube conduisant en particulier de l'eau potable

(30) Priorität: 01.04.1995 DE 19512386
(43) Veröffentlichungstag der Anmeldung: 02.10.1996
(73) Patentinhaber: THYSSEN GUSS AG, 45128 Essen (DE)
(72) Erfinder: Rammelsberg, Jürgen, Dr., 44652 Herne (DE); Overath, Horst, Dr., 42579 Heiligenhaus (DE)
(74) Vertreter: Dahlkamp, Heinrich-Leo

(56) Entgegenhaltungen:
- EP-A- 0 629 597
- FR-A- 474 422
- GB-A- 385 127
- GB-A- 545 805
- CHEMICAL ABSTRACTS, vol. 101, no. 18, 29.Oktober 1984 Columbus, Ohio, US; abstract no. 156570a, HAZAMA: "increasing the chemical resistance of mortar " Seite 279; XP002006678 & JP-A-05 988 387 22.Mai 1984
- CHEMICAL ABSTRACTS, vol. 111, no. 22, 27.November 1989 Columbus, Ohio, US; abstract no. 200725n, SASAGAWA: "lined pipes for water course" XP000156491 & JP-A-00 183 992 (DENKI) 29.März 1989
- CHEMICAL ABSTRACTS, vol. 92, no. 18, 5.Mai 1980 Columbus, Ohio, US; abstract no. 152032z, A. DMITRIEV ET AL.: "concrete and ferroconcrete pipes" XP000185475 & SU-A-709 600 (ALL-UNION SCIENTIFIC-INDUSTRIAL ENTERPRISES) 15.Januar 1980

## Beschreibung

Die Erfindung betrifft ein Verfahren zum Behandeln der Zementmörtel-Auskleidung eines insbesondere Trinkwasser führenden Rohres zur Bildung einer inerten Schicht im Bereich der Innenfläche der Auskleidung.

Zum Transport von Wässern aller Art werden heute bei Rohren aus Stahl oder duktilem Gußeisen Zementmörtel-Auskleidungen eingesetzt. Die Auskleidungen haben den Zweck, Korrosionsschäden zu vermeiden, die hydraulische Leistungsfähigkeit der Rohrleitung zu erhalten und das transportierte Wasser unbeeinflußt zum Verbraucher zu bringen. Sofern sich die transportierten Wässer im Kalk-Kohlensäure-Gleichgewicht befinden, sind nennenswerte Beeinflussungen durch die Zementmörtel-Auskleidungen nicht zu erwarten.

In einigen Fällen sind jedoch Beeinflussungen dort bekannt geworden, wo weiche und alkalische Wässer in frischen Zementmörtel-Auskleidungen transportiert wurden, und zwar besonders dann , wenn die Strömungsgeschwindigkeit aus betrieblichen Gründen relativ niedrig war. So konnte es dazu kommen, daß bei der Neuerschließung von Gewerbegebieten die geplanten Durchflußgeschwindigkeiten erst nach mehreren Jahren erreicht wurden, weil erst nach einiger Zeit die volle Nutzung eintrat.

In einem anderen Fall wurde eine unzulässige Anhebung des pH-Wertes des Wassers über Nacht in stagnierenden Endsträngen von Wohngebieten beobachtet. Diese pH-Wert-Anhebung ließ sich nur dadurch verringern, daß diese Endstränge durch zusätzliche Leitungen in das Netz eingebunden wurden, wodurch eine gewisse Durchstromung auch in den verbrauchsarmen Nachtstunden stattfand.

Besonders häufig tritt das genannte Phänomen bei der Verteilung von Talsperrenwässern auf, wenn aus betrieblichen Gründen eine Aufhärtung des Wassers vor Eintritt in das Versorgungsnetz unterbleiben muß. In Abhängigkeit von der geologischen Situation können diese Wässer äußerst geringe Gehalte an Kalzium und Magnesium, den Härtebildnern, besitzen.

Derartige Wässer nehmen Ca-Ionen aus jungen Zementmörtel-Auskleidungen auf, welche genügend gut lösliches Ca(OH)₂ aufweisen. Gleichzeitig wird durch die ebenfalls in Lösung gehenden (OH)-Ionen der pH-Wert des Wassers angehoben. Dies kann dazu führen, daR das Wasser nicht mehr den Anforderungen der Trinkwasser-Verordnung entspricht, in der ein Höchstwert von pH = 9,5 festgelegt ist.

Es ist bekannt, daß durch Zufuhr von Carbonat-Ionen das Ca(OH)₂ zu schwer löslichem CaCO₃ umgewandelt werden kann, so daß am Ende keine weitere pH-Wert-Anhebung stattfindet. Dieses 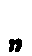 Einfahren" junger Zementmörtel-Auskleidungen setzt spezielle Kenntnisse voraus und führt zu einem erhöhten Aufwand beim Rohrnetzbetreiber.

Ebenso ist ein besonderer Aufwand darin zu sehen, durch geeignete Vorbehandlung das Wasser vor der Verteilung mit Härtebildnern anzureichern. Für viele Trinkwasserunternehmen kann diese Investition und der Betrieb einer geeigneten Aufbereitungsanlage den Absatz ihres Wassers wirtschafflich erschweren.

Weiter ist bekannt, eine junge Zementmörtel-Auskleidung durch Druckbegasung mit Kohlensäuregas vorzubehandeln, hier wird die CaCO₃ -Schicht auf der Innenfläche aus der Gasphase in feuchter Atmosphäre gebildet (Neue DELIWA-Zeitschrift, Heft 3/95, Seite 96 bis 101 oder EP 0 629 597 A1)). Bei der Erneuerung von innerstädtischen Versorgungsnetzen kann dies zu Schwierigkeiten führen, weil die erforderliche Zeitdauer für die Druckbegasung oft nicht zur Verfügung steht.

Eine starke Einengung der denkbaren Möglichkeiten zur Lösung der gestellten Aufgabe enthalten die Trinkwasserverordnung sowie die trinkwasserhygienischen Vorschriften, wie beispielsweise die KTW-Empfehlungen . So scheiden Kunststoffüberzüge, Versiegelungen oder ähnliche Maßnahmen aus, weil aus diesen Beschichtungsstoffen unerwünschte organische Verbindungen an das Trinkwasser abgegeben werden können.

Die Aufgabe der Erfindung besteht darin, dem Versorgungsunternehmen ein Rohr mit einer auf geeignete Weise vorbehandelten Zement-Mörtel-Auskleidung zur Verfügung zu stellen, welches keine weiteren Behandlungsvorgänge mehr erforderlich macht, so daß die Leitung sofort nach der üblichen Spülung und Desinfektion in Betrieb genommen werden kann.

Die Lösung dieser Aufgabe ist im Kennzeichen des Anspruches 1 angegeben. Die Unteransprüche 2 bis 9 enthalten sinnvolle Ergänzungsvorschläge.

Bei Zugabe von NaHCO₃ wird nach Maßgabe der Gleichung

Ca(OH)₂ + NaHCO₃ = NaOH + CaCO₃ + H₂O

im Bereich der Innenfläche der Zement-Mörtel-Auskleidung die gewünschte Carbonatisierungsschicht gebildet. Das leicht lösliche NaOH (Natronlauge) wird spätestens bei der Spülung vor Inbetriebnahme entfernt.

Alternativ oder gleichzeitig mit der vorgenannten Oberflächenvorbehandlung kann auch eine Kalzium-Phosphat-Schicht auf der Innenoberfläche der Zement-Mörtel-Auskleidung gebildet werden. Dabei kann eine NaH₂PO₄ (Natrium-Dihydrogen-Phosphat) enthaltende Lösung auf die Innenoberfläche der Zementmörtel-Auskleidung aufgesprüht werden. Die sich bei der chemischen Reaktion bildende Schicht aus Kalziumphosphat ist so dicht, daß ein Vordringen von Hydroxylionen aus dem Inneren des Zements nicht oder allenfalls nur geringfügig stattfinden kann.

Die Behandlung der Auskleidung erfolgt vorzugsweise im Herstellerwerk. Dazu kann die Lösung auf die Innenfläche der Auskleidung aufgesprüht werden. Es besteht aber auch die Möglichkeit, das Rohr mit der Auskleidung in der Lösung zu lagern oder das Rohr mit der Lösung zu füllen. Weiterhin besteht die Möglichkeit, in situ mit Zementmörtelauskleidung sanierte Leitungen durch Aufsprühen der Lösung vor Inbetriebnahme zu behandeln.

Das Natriumhydrogencarbonat oder das Natriumhydrogenphosphat kann aus anderen Salzen der Phosphorsäure bzw. der Kohlensäure durch entsprechendes Einstellen des ph-Wertes in der Lösung mittels Säuren und/oder Laugen in situ erzeugt werden. Zum Beispiel ist es denkbar, daß man Phosphorsäure und Natronlauge einsetzt.

Im folgenden wird die Erfindung anhand von Ausführungsbeispielen erläutert.

### Beispiel 1

In einem Rohr DN 150 mm mit einer nicht behandelten Zementmörtel-Auskleidung wird sehr weiches Trinkwasser mit einem pH-Wert von 8,5 gelagert. Nach drei Tagen war der pH-Wert des Trinkwassers auf 11,2 angestiegen.

### Beispiel 2

Das Rohr nach Beispiel 1 mit der Zementmörtel-Auskleidung wurde während einer Zeit von 14 Tagen in einer 2% Lösung aus Natriumhydrogencarbonat bei Raumtemperatur gelagert. Nach dem Ausspülen der Lösung wurde im Rohr sehr weiches Trinkwasser mit einem pH-Wert von 8,5 gelagert. Nach drei Tagen betrug der pH-Wert 9,2.

### Beispiel 3

Wie beim Beispiel 2 wurde das Rohr während einer Zeit von einem Tag bei Raumtemperatur mit einer NaH₂PO₄ Lösung füllt. Der pH-Wert des anschließend in dieser Auskleidung stagnierenden Wassers veränderte sich nicht meßbar.

### Beispiel 4

Das Rohr mit seiner Zementmörtel-Auskleidung wurde bei Raumtemperatur über eine in der Rohrachse angeordnete Sprühlanze mit einer 2 %igen NaH₂PO₄-Lösung ausgesprüht und mit Kappen verschlossen. Die Lösung zog oberflächlich in die Auskleidung ein und die Phosphatierungs-Reaktion lief während Lagerung und Transport des Rohres ab. Nach spätestens einem Tag war die Umsetzung soweit fortgeschritten, daß der pH-Wert des eingangs beschriebenen Wassers selbst nach 3-tägiger Stagnation im Rohr nur um 0,6 Einheiten angestiegen war.

## Patentansprüche

1. Verfahren zum Behandeln der Zementmörtel-Auskleidung eines insbesondere Trinkwasser führenden Rohres zur Bildung einer inerten Schicht im Bereich der Innenfläche der Auskleidung, **dadurch gekennzeichnet,** daß die Innenfläche der Auskleidung vor dem Einbau und/oder vor der Inbetriebnahme des Rohres mit NaH₂PO₄ (Natrium-Dihydrogen-Phosphat) und/oder NaHCO₃ (Natriumhydrogencarbonat) behandelt wird.

2. Verfahren nach Anspruch 1, **dadurch gekennzeichnet,** daß die Innenfläche mit einer NaH₂PO₄ und/oder NaHCO₃ enthaltenden wäßrigen Lösung behandelt wird.

3. Verfahren nach Anspruch 2, **dadurch gekennzeichnet,** daß die Lösung 0,1 bis 10 Gew% NaHCO₃ und/oder NaH₂PO₄ enthält.

4. Verfahren nach einem der Ansprüche 1 bis 4, **dadurch gekennzeichnet,** daß die Behandlung bei einer Temperatur von 5 bis 70 °C erfolgt.

5. Verfahren nach einem der Ansprüche 1 bis 4, **dadurch gekennzeichnet,** daß die Auskleidung auf eine Temperatur von bis zu 70 °C vorgewärmt wird.

6. Verfahren nach einem der Ansprüche 1 bis 5, **dadurch gekennzeichnet,** daß die Lösung auf eine Temperatur von 40 bis 50 °C vorgewärmt wird.

7. Verfahren nach einem der Ansprüche 1 bis 6, **dadurch gekennzeichnet,** daß die Lösung auf die Innenfläche der Auskleidung aufgesprüht wird.

8. Verfahren nach einem der Ansprüche 1 bis 7, **dadurch gekennzeichnet,** daß das Rohr mit der Auskleidung in der Lösung gelagert wird.

9. Verfahren nach einem der Ansprüche 1 bis 8, **dadurch gekennzeichnet,** daß NaH₂PO₄ oder NaHCO₃ aus anderen Salzen der Phosphorsäure bzw. der Kohlensäure durch entsprechendes Einstellen des ph-Wertes in der Lösung mittels Säuren und/oder Laugen in situ erzeugt werden.

## Claims

1. Process for treating cement mortar linings for pipes, especially pipes carrying drinking water to form an inert layer in the area of the interior surface of the lining, **characterized in that** the interior surface of the lining is treated with NaH₂PO₄ (sodium dihydrogen phosphate) and/or NaHCO₃ (sodium hydrogen carbonate).

2. Process pursuant to Claim 1, **characterized in that** the interior surface is treated with a water solution containing NaH₂PO₄ and/or NaHCO₃.

3. Process pursuant to Claim 2, **characterized in that** the solution contains 0.1 to 10 wt.% NaHCO₃ and/or NaH₂PO₄.

4. Process pursuant to any of claims 1 to 4, **characterized in that** treatment is effected at a temperature of 5 to 70°C.

5. Process pursuant to any of claims 1 to 4, **characterized in that** the lining is preheated to a temperature of up to 70°C.

6. Process pursuant to any of claims 1 to 5, **characterized in that** the solution is preheated to a temperature of 40 to 50°C.

7. Process pursuant to any of claims 1 to 6, **characterized in that** the solution is sprayed onto the interior surface of the lining.

8. Process pursuant to any of claims 1 to 7, **characterized in that** the pipe is stored with the lining in the solution.

9. Process pursuant to any of claims 1 to 8, **characterized in that** NaH₂PO₄ or NaHCO₃ is generated in situ out of the salts from the phosphoric acid and/or from the carbonic acid by correspondingly adjusting the ph-value in the solution by means of acids and/or lyes.

## Revendications

1. Procédé de traitement d'un revêtement en mortier de ciment dans un tube conduisant en particulier de l'eau potable pour constituer une couche inerte au niveau de la surface intérieure du revêtement **caractérisé en ce que** la surface intérieure du revêtement est traitée avec du NaH₂PO₄ (biphosphate de sodium) et/ou du NaHCO₃ (bicarbonate de sodium) avant la mise en place et/ou avant la mise en service du tube.

2. Procédé selon la revendication 1 **caractérisé en ce que** la surface intérieure est traitée avec une solution aqueuse contenant du NaH₂PO₄ et/ou du Na-HCO₃.

3. Procédé selon la revendication 2 **caractérisé en ce que** la solution contient 0,1 à 10 % en poids de NaHCO₃ et/ou de NaH₂PO₄.

4. Procédé selon l'une des revendicàtions 1 à 3 **caractérisé en ce que** le traitement est réalisé à une température de 5 à 70 °C.

5. Procédé selon l'une des revendications 1 à 4 **caractérisé en ce que** le revêtement est préchauffé à une température pouvant atteindre 70 °C.

6. Procédé selon l'une des revendications 1 à 5 **caractérisé en ce que** la solution peut être préchauffée à une température de 40 à 50 °C.

7. Procédé selon l'une des revendications 1 à 6 **caractérisé en ce que** la solution est pulvérisée sur la surface intérieure du revêtement.

8. Procédé selon l'une des revendications 1 à 7 **caractérisé en ce que** le tube pourvu du revêtement repose dans la solution.

9. Procédé selon l'une des revendications 1 à 8 **caractérisé en ce que** le NaH₂PO₄ ou le NaHCO₃ sont générés à partir d'autres sels de l'acide phosphorique ou de l'acide carbonique en réglant la valeur pH en correspondance au moyen d'acides et/ou de lessives alcalines in situ.
